# EUROPÄISCHE PATENTSCHRIFT

(11) **EP 4 152 109 B1**
(45) Veröffentlichungstag und Bekanntmachung des Hinweises auf die Patenterteilung: **16.04.2025**
(21) Anmeldenummer: 21197221.1
(22) Anmeldetag: 16.09.2021
(51) Int. Cl.: G05B 19/042, F03D 13/30

(54) **STEUERUNG UND VERFAHREN FÜR EINE WINDENERGIEANLAGE SOWIE COMPUTERPROGRAMM**
CONTROL AND METHOD FOR A WIND TURBINE AND COMPUTER PROGRAM
COMMANDE ET PROCÉDÉ POUR UNE ÉOLIENNE, AINSI QUE PROGRAMME INFORMATIQUE

(43) Veröffentlichungstag der Anmeldung: 22.03.2023
(73) Patentinhaber: Wobben Properties GmbH, 26607 Aurich (DE)
(72) Erfinder: Brombach, Johannes, 13437 Berlin (DE); Amelsberg, Swantje, 27804 Berne (DE); Giertz, Helge, 26789 Leer (DE); Poolmann, Alexander, 26632 Ihlow (DE)
(74) Vertreter: Eisenführ Speiser

(56) Entgegenhaltungen:
- US-A1- 2010 274 400
- US-A1- 2020 291 924

## Beschreibung

Die Erfindung betrifft eine Steuerung von Windenergieanlagen. Windenergieanlagen sind bekannt und weisen eine Steuerung auf, um den Betrieb der Windenergieanlage zu steuern. Hierbei liegt der Steuerung eine Betriebssoftware zugrunde, die verschiedene Betriebsarten ausführen kann. Die Betriebsarten werden in der Betriebssoftware beispielsweise durch eine Sensorik oder Betreibervorgaben ausgewählt. Hierbei sind die Betriebsarten so angepasst, dass diese einen Betrieb der Windenergieanlage über ihre gesamte Lebensdauer ermöglichen.

Eine typische Lebensdauer für eine Windenergieanlage wird hierbei von etwa 25 bis 30 Jahren angenommen. Um dies zu erreichen werden Belastungsmodelle für die Windenergieanlage definiert, an denen sich die Betriebsarten orientieren. Im Betrieb sind Betriebsarten vorgesehen, die eine kurzzeitige Überbelastung vor dem Hintergrund der Belastungsmodelle durch entsprechende Steuerung der Windenergieanlage hervorrufen. Solche Betriebsarten oder Betriebsmodi führen nicht unmittelbar zu einer Beschädigung der Windenergieanlage, sondern reduzieren lediglich deren Gesamtbetriebsdauer oder die Betriebsdauer einzelner Komponenten. Derartige Betriebsarten werden aber nur in seltenen Situationen, beispielsweise zur Stützung eines Netzes oder in anderen unerwarteten und nicht dem Regelbetrieb entsprechenden Fällen gewählt, so dass statistisch eine vorgegebene Lebensdauer erreicht wird. Somit sind die Funktionen der Betriebssoftware zum Ausführen der Betriebsarten fest vorgegeben und orientieren sich hierbei primär an Anforderungen und Voraussetzungen des Netzes sowie vorgegebener Vergütungsmaßstäbe.

Ein derartiger Betrieb der Windenergieanlage stellte in vergangener Zeit, in der Vergütungen für durch die Windenergieanlage in ein Netz eingespeiste Energie vertraglich fest über im Wesentlichen die gesamte Lebensdauer geregelt waren und in der Windenergieanlagen keine besonderen Netzstützungsfunktionen aufwiesen, für den Anlagenbetreiber eine geeignete Lösung für den Betrieb der Windenergieanlage dar. In jüngster Zeit verändern sich jedoch zunehmend häufiger im Laufe der Lebensdauer einer Windenergieanlage die Rahmenbedingungen. Derartige sich ändernde Rahmenbedingungen umfassen politische Entscheidungen bzgl. der Vergütung, zunehmend erhöhende Umweltauflagen, sich verändernde Bebauungen im Umfeld und steigende Anforderungen durch den Netzbetreiber. Teilweise stehen die einzelnen sich ändernden Rahmenbedingungen in unmittelbarem Zusammenhang miteinander. So werden beispielsweise neue Aufgaben zur Netzstützung bei Erfüllung durch den Betrieb durch eine angepasste Vergütung belohnt.

Um für diese sich ändernden Rahmenbedingungen den Betrieb der Windenergieanlage, beispielsweise durch zusätzliche Betriebsmodi anzupassen, ist eine Aktualisierung der Betriebssoftware nötig, die in der Regel nur durch den Windenergieanlagenhersteller möglich ist. Ändern sich demnach die Rahmenbedingungen unterschiedlich für Windenergieanlagen in unterschiedlichen territorialen Gebieten, so muss die Betriebssoftware jeder der Gruppen von Windenergieanlage eines Gebiets individuell angepasst werden. Hierbei sind insbesondere auch sich verändernde Rahmenbedingungen zu berücksichtigen, die sogar nur einzelne Windenergieanlagen betreffen. Demnach muss für einen unter den für die Windenergieanlage geltenden Rahmenbedingungen ideal angepassten Betrieb der Windenergieanlage, die Betriebssoftware regelmäßig und individuell angepasst oder aktualisiert werden. Dies führt zu einem Aufwand und damit verbundenen Kostenfaktor, der die ohnehin schrumpfenden Margen beim Betrieb einer Windenergieanlage zunehmen unrentabel macht.

Das Dokument US 2010/0274400 A1 offenbart ein Konfigurationssystem einer Windenergieanlage, bei dem eine Einstellung einer Windenergieanlage bezüglich vorgegebener Parameter basierend auf identifizierten bevorzugten Bereichen oder Einstellungen optimiert wird. Das Dokument US 2020/0291924 A1 offenbart ein Verfahren zum Aktualisieren eines Steuersystems einer Windenergieanlage.

Aufgabe der Erfindung ist es daher, den Problemen des Standes der Technik zu begegnen. Aufgabe der vorliegenden Erfindung ist es insbesondere, den Betrieb einer Windenergieanlage regelmäßig an die sich ändernden Rahmenbedingungen anpassen zu können, ohne hierfür eine vollständige Aktualisierung der Betriebssoftware durch den Hersteller zu benötigen. Ferner ist es zumindest Aufgabe der vorliegenden Erfindung, eine Alternative zum Stand der Technik vorzuschlagen.

Demnach betrifft die Erfindung eine Steuerung für eine Windenergieanlage mit einer Betriebssoftware zum Betreiben der Windenergieanlage nach Anspruch 1.

Die Erfindung betrifft eine Steuerung für eine Windenergieanlage mit einer Betriebssoftware zum Betreiben der Windenergieanlage. Hierbei ist die Betriebssoftware eingerichtet, zumindest eine elektrische Leistung eines Windenergieanlagengenerators, eine Drehzahl eines Windenergieanlagengenerators, einen Azimutwinkel einer Windenergieanlagengondel und einen Pitchwinkel mindestens eines Rotorblatts des Windenergieanlagenrotors zu regeln oder zu steuern. Die Betriebssoftware dient demnach insbesondere um im Wesentlichen alle zu regelnden oder zu steuernden Komponenten der Windenergieanlage, vorzugsweise, die zur Erzeugung elektrischer Energie dienen, zu steuern oder zu regeln. Hierbei ist beispielsweise eine direkte Steuerung oder Regelung der entsprechenden Komponenten der Windenergieanlage durch die Betriebssoftware, aber auch eine indirekte Steuerung oder Regelung umfasst. Bei einer indirekten Steuerung oder Regelung gibt die Betriebssoftware beispielsweise lediglich eine Vorgabe für eine mit der Steuerung der Windenergieanlage verbundene weitere Steuerung, die auch Komponentensteuerung genannt werden kann, oder ein weiteres Modul vor. Die tatsächliche Steuerung oder Regelung der Komponente, für die die weitere Steuerung oder das weitere Modul vorgesehen ist, übernimmt dann diese Komponentensteuerung.

Ferner umfasst die Betriebssoftware ein Kernmodul und mindestens eine Kundenapplikation. Die Betriebssoftware ist demnach vorzugsweise modular aufgebaut. Ein erstes Modul der Betriebssoftware ist demnach das Kernmodul und ein weiteres Modul der Betriebssoftware ist eine Kundenapplikation.

Die Kundenapplikation ist ferner eingerichtet, um einen Parameter in Abhängigkeit von mindestens einer Funktion der Kundenapplikation zu bestimmen. Das heißt, die Kundenapplikation umfasst mindestens eine Funktion, die, vorzugsweise als Ausgabewert, einen Parameter bestimmt. Dieser Parameter wird ferner von der Kundenapplikation für das Kernmodul bereitgestellt. Ein Parameter ist vorzugsweise ein beliebiger Wert, etwa eine Variable, der einer Funktion zum Betreiben zugeordnet ist. Ein Beispiel für einen Parameter ist ein Sollwert für eine Regelung einer Wirkleistungsabgabe der Windenergieanlage an das Netz. Ferner kann ein Parameter auch als Steuerbefehl verstanden werden, mit dem Funktionen, wie Fledermausschutzfunktionen, an- oder abgeschaltet werden können.

Ferner ist das Kernmodul eingerichtet, um eine auf die Windenergieanlage ausgeübte Last während eines Betreibens der Windenergieanlage zu detektieren oder zu prognostizieren. Wird vom Kernmodul eine derartige Last detektiert oder prognostiziert, die unterhalb einer vordefinierten Lastgrenze liegt, wird die Windenergieanlage in Abhängigkeit von dem durch die Kundenapplikation bereitgestellten Parameter betrieben. Im Fall, dass die detektierte oder prognostizierte Last oberhalb der vordefinierten Lastgrenze liegt, wird der von der Kundenapplikation bereitgestellte Parameter angepasst und die Windenergieanlage in Abhängigkeit von dem angepassten Parameter betrieben. Vorzugsweise wird dieser Parameter im Kernmodul selbst angepasst. Alternativ wird im Fall einer detektierten Last oder einer prognostizierten Last, die oberhalb der vordefinierten Lastgrenze liegt, der von der Kundenapplikation bereitgestellte Parameter unberücksichtigt gelassen und die Windenergieanlage mit einem Parameter betrieben, der im Kernmodul bestimmt oder hinterlegt ist.

Vorzugsweise ist die vordefinierte Lastgrenze eine obere Lastgrenze oder eine Referenzlastgrenze. Eine obere Lastgrenze beschreibt eine durch Versuche, Simulationen und/oder Berechnungen festgelegte Grenze, die nicht überschritten werden darf, da bei einer Überschreitung unmittelbar das Bauteil, für das die Lastgrenze definiert ist, Schaden nehmen würde. Eine Referenzlastgrenze ist demgegenüber eine ebenfalls durch Versuche, Simulationen und/oder Berechnungen festgelegte Grenze, die solange sie nicht überschritten wird im Normalfall zu einer Referenzlebensdauer, z. B. 20 Jahren, führt. Ein Überschreiten einer Referenzlastgrenze würde demnach zwar nicht unmittelbar zur Beschädigung führen aber die Lebensdauer des Bauteils gegenüber der Referenzlebensdauer reduzieren.

Vorzugsweise ist das Kernmodul eingerichtet, um mehrere auf die Windenergieanlage ausgeübte Lasten während eines Betreibens der Windenergieanlage zu detektieren oder zu prognostizieren. Entsprechend ist dann für jede der ausgeübten Lasten eine zugeordnete Lastgrenze definiert. Beispielsweise wird in diesem Fall, wenn alle Lasten unter ihren zugeordneten Lastgrenzen liegen, die Windenergieanlage in Abhängigkeit von dem durch die Kundenapplikation bereitgestellten Parameter betrieben. Im Fall, dass nur eine der Lasten oberhalb ihrer Lastgrenze liegt, wird bereits der Parameter angepasst und die Windenergieanlage in Abhängigkeit von dem angepassten Parameter betrieben.

Besonders bevorzugt werden bei der detektierten oder prognostizierten Last genau die Lasten betrachtet, auf die der durch die Kundenapplikation bereitgestellte Parameter eine Auswirkung hat oder haben kann.

Außerdem weist die Steuerung eine erste Programmierschnittstelle und eine zweite Programmierschnittstelle auf. Die erste Programmierschnittstelle ist eingerichtet, um das Kernmodul, insbesondere die Lastgrenzen oder Betriebsfunktionen, die im Kernmodul ausgeführt werden, um die Windenergieanlage zu betreiben, zu programmieren. Die zweite Programmierschnittstelle ist ferner eingerichtet, um die Kundenapplikation, insbesondere deren Funktion, zu programmieren. Außerdem ist die zweite Programmierschnittstelle eingerichtet, um ein Programmieren oder Umprogrammieren des Kernmoduls über die zweite Programmierschnittstelle zu verhindern.

Demnach umfasst die Betriebssoftware zur Steuerung einer Windenergieanlage mehrere Module, die über getrennte Programmierschnittstellen programmierbar sind. Das Kernmodul dient zur Steuerung und Regelung, also vorzugsweise zum automatisierten Betrieb, der Windenergieanlage und zur Überwachung der Belastung der Windenergieanlage. Diesen Betrieb kann das Kernmodul in Abhängigkeit von Parametern ausführen, die wiederum über eine Kundenapplikation bereitgestellt werden. Diese Parameter jedoch anzupassen oder unberücksichtigt zu lassen, wenn hierdurch ein Überlastfall entsteht, sichert das Kernmodul während des Betriebs der Windenergieanlage ab, so dass keine Betriebsart ausgeführt wird, die zu einer Beschädigung der Windenergieanlage führen kann. Ferner wird jedoch durch die Kundenapplikation, die über eine separate Programmierschnittstelle programmierbar ist, für einen Benutzer die Möglichkeit bereitgestellt, individuelle Funktionen zum Betrieb der Windenergieanlage vorzugeben, deren Parameter dann von dem Kernmodul beim Betrieb berücksichtigt werden.

Eine individuelle Programmierung einer Windenergieanlage durch eine Kundenapplikation zum Anpassen des Betriebsverhaltens der Windenergieanlage wird somit geschaffen, wohingegen jedoch ein sicherer und fehlerfreier Betrieb der Windenergieanlage weiterhin durch das Kernmodul, das über die Programmierschnittstelle, mit der die Kundenapplikation programmierbar ist, nicht änderbar ist, sichergestellt wird.

Es wird somit für den Kunden oder Betreiber eine individuelle Anpassbarkeit des Betriebs jeder einzelnen Windenergieanlage ermöglicht, ohne, dass der sichere Betrieb gefährdet ist.

Gemäß einer ersten Ausführungsform ist der Zugriff auf die erste Programmierschnittstelle durch eine erste Sicherheitseinrichtung geschützt. Der Zugriff auf die zweite Programmierschnittstelle ist durch eine zweite Sicherheitseinrichtung geschützt, die sich von der ersten Sicherheitseinrichtung vorzugsweise unterscheidet. Das heißt, dass jede der beiden Programmierschnittstellen, nämlich die erste Programmierschnittstelle und die zweite Programmierschnittstelle, jeweils eine eigene Sicherheitseinrichtung aufweisen. Diese Sicherheitseinrichtungen sind ferner vorzugsweise unterschiedlich. Sicherheitseinrichtungen sind grundsätzlich bekannt und umfassen beispielsweise eine Authentisierung eines Benutzers, der dann authentifiziert wird, um auf die Programmierschnittstelle zuzugreifen. Zur Authentisierung ist beispielsweise die Eingabe eines Benutzernamens und eines Passworts nötig. Wird hier auf zwei unterschiedliche Sicherheitseinrichtungen verwiesen, so kann der Unterschied gemäß einer Ausführungsform in den Sicherheitseinrichtungen bereits in unterschiedlichen Zugangsdaten, wie Benutzernamen und/oder Passwörtern liegen. Ferner ist aber auch umfasst, dass die erste Sicherheitseinrichtung vergleichsweise sicherer ausgestaltet ist, als die zweite Sicherheitseinrichtung, indem beispielsweise für die zweite Sicherheitseinrichtung zur Authentisierung und Authentifizierung lediglich Benutzername und Passwort nötig sind, wobei zur Authentisierung und Authentifizierung an der ersten Programmierschnittstelle durch die erste Sicherheitseinrichtung zusätzlich ein Einmalpasswort oder ein Token benötigt wird. Demnach ist besonders bevorzugt ein Maß der Sicherheit für einen Zugriff auf die erste Programmierschnittstelle durch die erste Sicherheitseinrichtung höher gewählt, als für den Zugriff auf die zweite Programmierschnittstelle mit der zweiten Sicherheitseinrichtung.

Hierdurch wird sichergestellt, dass eine Person, die berechtigt ist, auf die zweite Programmierschnittstelle zuzugreifen, nur in Ausnahmefällen, wenn diese beispielsweise einem bestimmten Personenkreis, wie beispielsweise einem Errichter oder einem Hersteller der Windenergieanlage angehört, auch auf die erste Programmierschnittstelle zugreifen kann. Der Personenkreis, der beispielsweise den Betreiber umfasst, der üblicherweise auf die zweite Programmierschnittstelle zugreifen kann, wird somit in der Regel nicht die erste Sicherheitseinrichtung überwinden und auf die erste Programmierschnittstelle zugreifen können, so dass das Kernmodul vor Umprogrammieren durch diesen Personenkreis geschützt ist. Das heißt, ein Betreiber oder Anwender der Windenergieanlage kann somit aufgrund seiner Zugangsberechtigung über die zweite Sicherheitsvorrichtung auf die zweite Programmierschnittstelle zugreifen, um die Kundenapplikation anzupassen und so einen Betrieb der Windenergieanlage individuell anzupassen. Demgegenüber ist aber das Kernmodul, das für allgemeine Sicherheitsaspekte der Windenergieanlage vorgesehen ist, gegen ein Umprogrammieren durch den Betreiber oder Anwender geschützt.

Gemäß einer weiteren Ausführungsform ist über die zweite Programmierschnittstelle mindestens eine weitere Kundenapplikation in die Betriebssoftware einfügbar. Diese weitere Kundenapplikation enthält vorzugsweise mindestens eine weitere Funktion. Die weitere Funktion dient ebenfalls, um mindestens einen oder mehrere Parameter für das Kernmodul bereitzustellen. Somit ist für einen Benutzer der Windenergieanlage nicht nur eine vorhandene Kundenapplikation abänderbar, um den Betrieb der Windenergieanlage anzupassen, sondern es können sogar beliebige Funktionen in neuen Kundenapplikationen von einem Benutzer bereitgestellt und in die Betriebssoftware integriert werden. Die Ansteuerung der Windenergieanlage ist demnach durch mehrere Parameter voneinander unterschiedlicher Applikationen anpassbar. So dient beispielsweise eine erste Kundenapplikation zum Erzeugen von individuellen zeitgesteuerten Befehlen zur Steuerung einer Fledermausschutzfunktion, während eine zweite Kundenapplikation Sollwerte für eine Regelung der einzuspeisenden Energie vorgibt.

Gemäß einer weiteren Ausführungsform umfasst die Steuerung mindestens eine Sensorschnittstelle. Die Sensorschnittstelle dient zum Empfangen eines oder mehrerer Sensordaten von Sensoren der Windenergieanlage selbst oder einer mit der Windenergieanlage verbundenen Einheit, wie beispielsweise einem Windmessmast. Ferner ist das Kernmodul eingerichtet, die Sensordaten oder aus den Sensordaten mit dem Kernmodul abgeleitete Sensordaten für die Kundenapplikation oder die weitere Kundenapplikation bereitzustellen. Die Kundenapplikation oder die weitere Kundenapplikation ist ferner eingerichtet, den Parameter für das Kernmodul in Abhängigkeit von der mindestens einen in der Kundenapplikation hinterlegten Funktion und zusätzlich in Abhängigkeit von den Sensordaten oder den abgeleiteten Sensordaten zu ermitteln.

Das Kernmodul kann somit unmittelbar auf Sensordaten der Windenergieanlage oder einer mit der Windenergieanlage verbundenen Einheit, wie beispielsweise ein Windmessmast zugreifen, um so aktuelle Sensordaten bei der Erzeugung des Parameters für die Steuerung zu berücksichtigen. Eine Regelung der Windenergieanlage, die eigentlich mit dem Kernmodul ausgeführt wird, kann so mit einer Kundenapplikation vollständig übernommen werden und ist somit individuell anpassbar. Bei der Ausführung durch die Kundenapplikation wird jedoch immer durch die Betriebssoftware geprüft, ob diese Ausführung zur Beschädigung der Anlage führen kann, und wirkt nur in solchen Fällen auf den Betrieb ein.

Gemäß einer weiteren Ausführungsform umfasst die Betriebssoftware eine Anwendungsschnittstelle zwischen dem Kernmodul und der Kundenapplikation, um Parameter von der Kundenapplikation an das Kernmodul zu übertragen sowie Sensorwerte oder Statusdaten, die den Betriebszustand der Windenergieanlage anzeigen, vom Kernmodul an die Kundenapplikation zu übertragen. Vorzugsweise ist die Anwendungsschnittstelle eingerichtet, um als Parameter einen Steuerbefehl oder eine Variable, die insbesondere einen Sollwert für eine Regelung oder eine Stellgröße umfasst, zu übertragen.

Die Anwendungsschnittstelle ist somit direkt in der Betriebssoftware realisiert, so dass eine unmittelbare Kommunikation zwischen den Modulen der Betriebssoftware möglich ist. Weiter sind so Kernmodul und Kundenapplikation durch die Anwendungsschnittstelle klar voneinander getrennt und gegeneinander gesichert, da eindeutig durch die Anwendungsschnittstelle definierbar ist, welche Daten zwischen der Kundenapplikation sowie dem Kernmodul ausgetauscht werden dürfen.

Gemäß einer weiteren Ausführungsform ist die Steuerung Bestandteil eines Windparkreglers oder einer Windenergieanlage. Alternativ ist die Steuerung eine verteilte Steuerung und zumindest teilweise Bestandteil einer Leitstelle, eines Windparkreglers, einer Windenergieanlagensteuerung und/oder eines weiteren, insbesondere entfernten Rechners. Besonders bevorzugt ist das Kernmodul in der Windenergieanlage oder dem Windparkregler angeordnet oder anordenbar. Die Kundenapplikation oder die weitere Kundenapplikation ist in der Leitstelle oder dem weiteren Rechner angeordnet oder anordenbar. Weiter sind gemäß einer weiteren Alternative unterschiedliche Kundenapplikationen in unterschiedlichen und örtlich voneinander getrennten Rechnereinheiten angeordnet, wobei die Rechnereinheiten jeweils eine zweite Programmierschnittstelle aufweisen.

Demnach umfasst die Erfindung Steuerungen, die einerseits unmittelbar in einer Windenergieanlage oder einem Windparkregler vollständig angeordnet sind, aber auch Steuerungen, die verteilte Steuerungen sind. So ist besonders bevorzugt das Kernmodul Bestandteil einer Windenergieanlage, um die Windenergieanlage zu steuern. Die Kundenapplikation kann jedoch beispielsweise in einer Leitstelle, die eine übergeordnete Instanz darstellt und mit mehreren Windparks verbunden ist, ausgeführt werden, so dass auch ein Einfluss auf den Betrieb aus der Ferne möglich ist. Gemäß einer weiteren bevorzugten Alternative wird die Kundenapplikation auf einem weiteren Rechner ausgeführt, der beispielsweise auch ein mobiles Gerät, wie ein Laptop oder ein Mobiltelefon sein kann. Demnach kann ein Parameter zum Betreiben der Windenergieanlage aus der Ferne bereitgestellt werden.

Gemäß einer weiteren Ausführungsform ist die Steuerung mit mindestens einer steuer- oder regelbaren Hardwarekomponente verbunden. Die Hardwarekomponente ist vorzugsweise eine Hardwarekomponente der Windenergieanlage. Ferner ist das Kernmodul eingerichtet, die Hardwarekomponente zu steuern oder zu regeln. Hierbei erfolgt die Steuerung oder Regelung der Hardwarekomponente durch das Kernmodul in Abhängigkeit von Parametern, die Steuerbefehle oder Variablen sind und über die Anwendungsschnittstelle von der Kundenapplikation empfangen werden. Derartige Hardwarekomponenten umfassen Komponenten, die insbesondere eine Auswirkung auf den Betrieb der Windenergieanlage haben. Derartige Komponenten sind beispielsweise Komponenten zur Regelung oder Steuerung der elektrischen Leistung eines Windenergieanlagengenerators, zur Steuerung oder Regelung der Drehzahl eines Windenergieanlagenrotors, zur Steuerung oder Regelung eines Azimutwinkels einer Windenergieanlagengondel und/oder zur Steuerung oder Regelung mindestens eines Pitchwinkels mindestens eines Rotorblatts des Windenergieanlagenrotors.

Gemäß einer weiteren Ausführungsform umfasst das Kernmodul ein Konfliktmanagementmodul. Das Konfliktmanagementmodul ist eingerichtet, Parameter, nämlich vorzugsweise umfassend Steuerbefehle oder Variablen, die über die Anwendungsschnittstelle von der Kundenapplikation empfangen werden, auf Konflikte mit von dem Kernmodul ausgeführten Betriebsfunktionen zu prüfen. Alternativ oder zusätzlich ist das Konfliktmanagementmodul eingerichtet, Parameter, die über die Anwendungsschnittstelle empfangen werden, auf Konflikte mit Parametern zu prüfen, die von der weiteren Kundenapplikation über die Anwendungsschnittstelle empfangen werden.

Das Konfliktmanagementmodul dient demnach zur Identifizierung von Konflikten, die entstehen, wenn ein vom Kernmodul ausgeführter Betrieb der Windenergieanlage durch Parameter, die von der Kundenapplikation empfangen werden, zu einem unsicheren oder fehlerhaften Zustand der Windenergieanlage führt. Außerdem wird überprüft, ob Parameter, die von unterschiedlichen Kundenapplikationen empfangen werden, einen derartigen unsicheren oder fehlerhaften Zustand der Windenergieanlage verursachen würden. Beispiele für derartige Konflikte sind beispielsweise ein von der Kundenapplikation empfangener Parameter, der einen Stopp der Windenergieanlage anfordert, wohingegen die weitere Kundenapplikation einen Steuerbefehl über die Anwendungsschnittstelle überträgt, der eine maximal mögliche elektrische Energieerzeugung der Windenergieanlage fordert. Weiter würde auch beispielsweise ein Konflikt erkannt werden, wenn das Kernmodul aufgrund eines Wartungsintervalls den Betrieb der Windenergieanlage gestoppt hat, wohingegen über die Kundenapplikation ein Betrieb der Windenergieanlage gefordert wird. Auch von unterschiedlichen Kundenapplikationen geforderte unterschiedliche Sollwerte für die gleiche Regelung, beispielsweise unterschiedliche Leistungsreduzierungen der Windenergieanlage, können so als Konflikt betrachtet werden.

Das Erkennen eines Konflikts stellt somit nicht das Erkennen einer Überbelastung der Windenergieanlage dar, der beispielsweise durch ungeeignete Parameter, die über die Anwendungsschnittstelle empfangen werden, verursacht wird, sondern vielmehr dient die Erkennung von Konflikten mit dem Konfliktmanagementmodul zur Entscheidung, welcher der zueinander in Konflikt stehenden Parametern auszuführen ist. Vorzugsweise wird im Fall eines detektierten Konflikts der oder die Parameter, die über die Anwendungsschnittstelle empfangen wurden unberücksichtigt, und es wird besonders bevorzugt ein Betrieb nur in Abhängigkeit von Parametern und Betriebsfunktionen des Kernmoduls ausgeführt. Gemäß einer weiteren Ausführungsform ist jedem der Parametern oder zumindest einigen der Parameter eine Priorität zugeordnet. Im Fall eines Konflikts zweier Parameter wird dann die Priorisierung der Parameter betrachtet, um den Parameter beim Betrieb zu berücksichtigen, der die höhere Priorität aufweist. Einem Parameter, der beispielsweise eine Netzstützungsmaßnahme auslöst, ist demnach vorzugsweise eine höhere Priorität zugeordnet als einem Parameter, der einen Fledermausschutz oder einen Normalbetrieb auslöst.

Gemäß einer weiteren Ausführungsform umfasst das Kernmodul eine Restlaufzeitbestimmung, die eingerichtet ist nach Empfang eines Parameters oder eines geänderten Parameters von der Kundenapplikation die mit Verwendung dieses Parameters geschätzte Restlebensdauer der Windenergieanlage zu bestimmen oder zu schätzen und die Restlebensdauer an die Kundenapplikation zu übertragen. Alternativ oder zusätzlich umfasst das Kernmodul eine Laufzeitverbrauchsbestimmung, die eingerichtet ist, nach Empfang eines Parameters oder eines geänderten Parameters von der Kundenapplikation einen mit Verwendung dieses Parameters geschätzten Laufzeitverbrauch zu bestimmen oder zu schätzen und an die Kundenapplikation zu übertragen. Die Laufzeitverbrauchsbestimmung kann beispielsweise einen Wert, der zwischen einem unteren Wert, z. B. 0 oder 0,2, und einem oberen Wert, z. B. 2 oder 3, liegt, ausgeben. Dieser Wert sagt aus, wie viel Lebensdauer oder Laufzeit im Vergleich zur Referenzlebensdauer beim aktuelle Betriebszustand verbraucht wird. Führt eine Kundenapplikation beispielsweise zu einem Wert, der auch Laufzeitverbrauchsindikator genannt werden kann, von 2, dann wird die Lebensdauer der Anlage doppelt so schnell erreicht, also in absoluten Zahlen halbiert. Bei einem Wert von 1 wird die im Datenblatt angenommene Lebensdauer genau erreicht. Betriebszustände mit einem Laufzeitverbrauchsindikator unter 1 spiegeln eine sehr schonende Betriebsweise wieder, welche zu einem sehr geringen Laufzeitverbrauch oder Lebensdauerverbrauch führt. Dies können zum Beispiel Zustände mit einer stark reduzierten Ausgangsleistung sein.

Durch Abruf kann ein Betreiber so unmittelbar einen Rückschluss auf die Auswirkung seiner individuellen Anpassung des Betriebs erhalten, um ggf. die Kundenapplikationen anzupassen.

Gemäß einer weiteren Ausführungsform ist die Steuerung mit einem Netzwerk, nämlich einem Datennetzwerk zur Übertragung von Daten, verbunden. Ferner ist die Steuerung eingerichtet, um in Abhängigkeit von einer Funktion der Kundenapplikation von dem Kernmodul empfangene Daten, wie die Restlebensdauer, insbesondere Zustandsdaten der Steuerung oder einer weiteren mit der Steuerung verbundenen Einheit oder Komponente der Windenergieanlage, wie beispielsweise einem Sensor, über das Netzwerk auszusenden.

Sensordaten oder Zustandsdaten werden demnach der Kundenapplikation von dem Kernmodul bereitgestellt und es können Funktionen der Kundenapplikation von einem Kunden angepasst oder bereitgestellt werden, die das Aussenden dieser Daten über das Netzwerk, beispielsweise an ein mobiles Gerät, wie ein Mobiltelefon, ermöglichen. Neben der individuellen Programmierung der Steuerung der Windenergieanlage lassen sich so durch die Kundenapplikation auch individuelle Abfragen des Betriebszustands der Windenergieanlage durch einen Betreiber festlegen.

Gemäß einer weiteren Ausführungsform ist die Steuerung mit dem Netzwerk verbunden und eingerichtet, um in Abhängigkeit von einer Funktion der Kundenapplikation durch die Kundenapplikation über das Netzwerk Daten zu empfangen. Außerdem ist die Kundenapplikation eingerichtet, die empfangenen Daten oder mit der Funktion daraus abgeleitete Daten über die Anwendungsschnittstelle an das Kernmodul, insbesondere als Parameter, zu übertragen. Somit kann die Kundenapplikation auch genutzt werden, um über das Netzwerk bestimmte Steuerungen oder Parameter, wie Sollwerte, zur Regelung der Windenergieanlage über ein mit der Kundenapplikation vordefiniertes entferntes Gerät, wie beispielsweise ein Mobiltelefon, zu empfangen, und den Betrieb der Windenergieanlage in Abhängigkeit dieser Daten anzupassen.

Gemäß einer weiteren Ausführungsform sind die von der Kundenapplikation über das Netzwerk empfangene Daten Sensordaten. Ferner ist die Steuerung eingerichtet, um die mit der Kundenapplikation empfangenen Sensordaten mit einer in der Kundenapplikation hinterlegten Funktion anzupassen oder zu verarbeiten, um dadurch Steuerbefehle oder Sollwerte für eine Steuerung der Windenergieanlage erzeugen und diese als Parameter an das Kernmodul übertragen zu können.

Die Kundenapplikation ist demnach derart durch Funktionen ausbildbar, dass diese weitere Sensordaten, die Einfluss auf einen Betrieb der Windenergieanlage haben können aber nicht durch das Kernmodul bereitstellbar sind, unmittelbar in Steuerbefehle oder angepasste Sollwerte einfließen zu lassen, und diese Steuerbefehle oder Sollwerte an das Kernmodul zu übertragen. Der Betrieb der Windenergieanlage kann so um Berücksichtigung weiterer, nicht üblicherweise zum Umfang der Windenergieanlage selbst gehörender Sensoren, in individueller Weise ergänzt werden.

Gemäß einer weiteren Ausführungsform sind im Kernmodul mehrere Betriebskennlinien, mehrere vordefinierte Parameter einer Betriebsfunktion in einem erlaubten oder definierten Parameterraum und/oder mehrere vordefinierte Betriebsfunktionen hinterlegt. Ferner ist die Steuerung eingerichtet, über die Anwendungsschnittstelle einen Aufruf mindestens einer der Betriebsfunktionen, eine Verwendung der oder eines der Parameter für die Betriebsfunktion oder eine Auswahl mindestens einer der hinterlegten Betriebskennlinien auszuführen, wobei vorzugsweise eine Änderungsmöglichkeit der Betriebskennlinien, der vordefinierten Parameter für die Betriebsfunktion oder der vordefinierten Betriebsfunktionen über die Anwendungsschnittstelle gesperrt ist. Besonders bevorzugt ist die Anwendungsschnittstelle derart gesichert, dass lediglich also ausschließlich ein Aufruf der hinterlegten Betriebskennlinien und/oder der Betriebsfunktionen und/oder der Parameter für eine der Betriebsfunktionen über die Anwendungsschnittstelle möglich ist, wobei alle weiteren von der Kundenapplikation an das Kernmodul übertragenen Daten vom Kernmodul unterdrückt oder nicht beachtet werden.

Demnach bietet das Kernmodul gemäß dieser Ausführungsform lediglich die Möglichkeit über die Anwendungsschnittstelle von der Kundenapplikation empfangene Daten zur Auswahl auszuführender Betriebskennlinien oder Betriebsfunktionen als Parameter zu empfangen. Eine vollständig individuelle Steuerung des Betriebs ist somit nicht möglich, wohingegen ein besonders sicherer Betrieb der Windenergieanlage ermöglicht wird. Eine in vorgegebenem Umfang individuelle Anpassbarkeit des Betriebs wird damit durch die Kundenapplikation geboten.

Gemäß einer weiteren Ausführungsform ist in dem Kernmodul mindestens eine Betriebskennlinie, die vorzugsweise eine Drehzahl-Leistungs-Kennlinie ist, speicherbar. Das Kernmodul ist ferner eingerichtet, um in Abhängigkeit von der Betriebskennlinie eine Einspeiseleistung der Windenergieanlage zu regeln. Ferner ist die Kundenapplikation vorzugsweise eingerichtet, die Betriebskennlinie für das Kernmodul bereitzustellen oder die gespeicherte Betriebskennlinie anzupassen oder zu ändern.

Es sind demnach nicht nur Parameter von der Kundenapplikation zu übertragen, sondern komplette Betriebskennlinien für das Kernmodul vorzugeben.

Ferner umfasst die Erfindung ein Verfahren für eine Steuerung nach einem der Ansprüche 1 bis 13, wobei gemäß dem Verfahren über die zweite Programmierschnittstelle eine Kundenapplikation programmiert oder umprogrammiert wird, um den Betrieb der Steuerung anzupassen.

Außerdem umfasst die Erfindung ein Computerprogrammprodukt, umfassend Instruktionen, die, wenn sie auf einem Computer ausgeführt werden, den Computer veranlassen, das Verfahren nach Anspruch 14 auszuführen oder die, wenn sie auf einem Computer ausgeführt werden, den Computer veranlassen, eine Steuerung nach einem der Ansprüche 1 bis 13 zu bilden.

Weitere Ausführungsformen ergeben sich anhand der in den Figuren näher erläuterten Ausführungsbeispiele. Hierbei zeigen:
- Figur 1: eine Windenergieanlage,
- Figur 2: eine Steuerung für eine Windenergieanlage gemäß einem ersten Ausführungsbeispiel,
- Figur 3: eine verteilte Steuerung für eine Windenergieanlage gemäß einem zweiten Ausführungsbeispiel der Erfindung und
- Figur 4: die Schritte eines Ausführungsbeispiels des Verfahren.

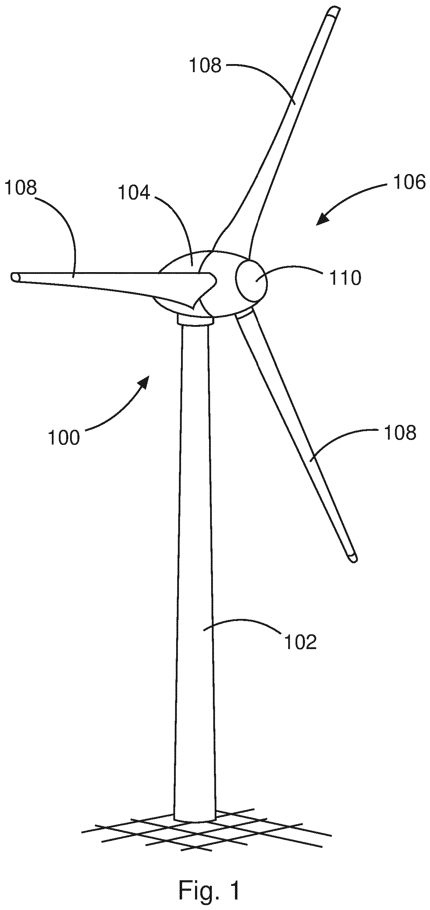

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

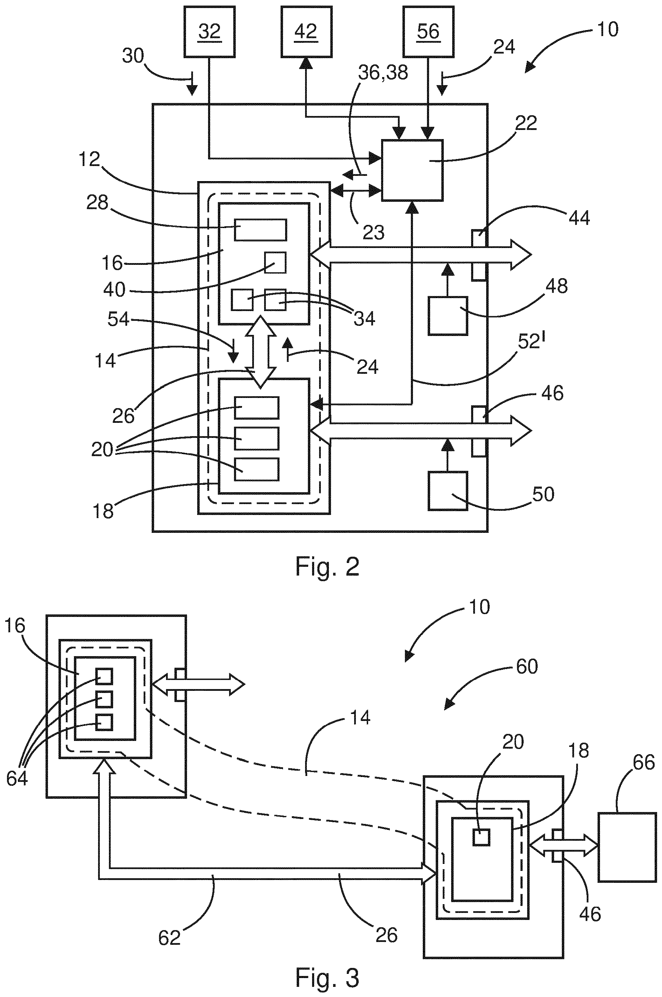

Figur 2 zeigt eine Steuerung 10 für eine Windenergieanlage 100. Die Steuerung 10 umfasst einen Speicher 12, in dem Daten speicherbar sind. Insbesondere umfasst der Speicher 12 eine Betriebssoftware 14. Die Betriebssoftware 14 umfasst ferner ein Kernmodul 16 sowie eine Kundenapplikation 18. In der Kundenapplikation 18 sind mehrere Funktionen 20 hinterlegt, die mithilfe eines Prozessors 22 ausgeführt werden. Der Prozessor 22 ist hierzu über eine Datenverbindung 23 mit dem Speicher 12 verbunden. Die Funktionen 20 liefern als Ausgabewert einen Parameter 24, der über eine Anwendungsschnittstelle 26 von der Kundenapplikation 18 an das Kernmodul 16 übertragen wird.

Das Kernmodul 16 ist eingerichtet, um in Abhängigkeit des Parameters 24 basierend auf Betriebsfunktionen 28, die im Kernmodul 16 hinterlegt sind, die Windenergieanlage 100 zu betreiben. Das Kernmodul 16 prüft während des Betriebs der Windenergieanlage 100 mithilfe des Prozessors 22, und insbesondere mit den Betriebsfunktionen 28, verschiedene Sensorwerte 30, die dem Prozessor 22 während des Betriebs der Windenergieanlage 100 von Sensoren 32 zugeführt werden.

Mehrere für verschiedene Komponenten im Kernmodul 16 hinterlegte Lastgrenzen 34 dienen zum Abgleich der mit dem Prozessor 22 aus den Sensorwerten 30 detektierten Last 36 oder einer prognostizierten Last 38. Der Abgleich prüft in dem Kernmodul 16, ob die detektierte Last 36 oder eine prognostizierte Last 38 oberhalb der entsprechenden vordefinierten Lastgrenze 34 liegt. Ist dies nicht der Fall, wird die Windenergieanlage 100 mit der Betriebsfunktion 28 unter Berücksichtigung des Parameters 24 betrieben. Tritt jedoch der Fall ein oder wird ein Fall prognostiziert, bei dem die Last 36, 38 oberhalb der vordefinierten Lastgrenze 34 liegt, so wird in der Betriebsfunktion 28 der Parameter 24 entweder unberücksichtigt gelassen, und die Windenergieanlage 100 mit einem im Kernmodul 16 bestimmten Parameter 40 betrieben.

Zum Betreiben ist mit der Steuerung 10 beispielsweise eine Hardware 42 der Windenergieanlage 100 verbunden, die ebenfalls ihren Betriebsstatus an den Prozessor 22 der Windenergieanlage 100 liefert, um so die auf die Windenergieanlage 100 ausgeübte Last 36, 38 zu bestimmen.

Ferner umfasst die Steuerung 10 eine erste Programmierschnittstelle 44 und eine zweite Programmierschnittstelle 46. Mit der ersten Programmierschnittstelle 44 kann das Kernmodul 16 programmiert oder umprogrammiert werden. Insbesondere lassen sich auch die Lastgrenzen 34 einstellen und die Betriebsfunktionen 28 anpassen. Die zweite Programmierschnittstelle 46 ist eingerichtet, um die Kundenapplikationen 18, nämlich insbesondere deren Funktionen 20 zu programmieren oder umzuprogrammieren. Ferner ist jedoch die zweite Programmierschnittstelle 46 so eingerichtet, dass diese ein Umprogrammieren des Kernmoduls 16 über die zweite Programmierschnittstelle 46 verhindert. Hierzu umfasst die Steuerung 10 eine erste Sicherheitseinrichtung 48 sowie eine zweite Sicherheitseinrichtung 50. Die erste Sicherheitseinrichtung 48 schützt die erste Programmierschnittstelle 44, so dass ein Zugriff auf das Kernmodul 16 nur für berechtigte Personen, wie beispielsweise einem Hersteller der Windenergieanlage 100, ermöglicht wird. Die zweite Sicherheitseinrichtung 50 dient einerseits, um den Zugriff über die zweite Programmierschnittstelle 46 auf die Kundenapplikation 18 vor unberechtigtem Zugriff zu schützen aber gleichzeitig auch, um sicherzustellen, dass über die zweite Programmierschnittstelle 46 ein Umprogrammieren des Kernmoduls 16 nicht möglich ist.

Ferner ist auch die Kundenapplikation 18 über eine weitere Datenverbindung 52, die auch als Programmierschnittstelle ausgebildet sein kann, mit dem Prozessor 22 verbunden. So können der Kundenapplikation 18, nämlich insbesondere den Funktionen 20 der Kundenapplikation 18 gemäß diesem Ausführungsbeispiel Sensorwerte 30 der Sensoren 32 zugeführt werden, um die Parameter 24 auch in Abhängigkeit von diesen Sensorwerten 30 zu erzeugen. Alternativ gemäß einem weiteren Ausführungsbeispiel, das hier nicht dargestellt ist aber bis auf die folgende genannte Änderung identisch ist, ist diese Datenverbindung 52 zwischen dem Prozessor 22 und der Kundenapplikation 18 nicht vorgesehen. Gemäß dem alternativen Ausführungsbeispiel werden daher auch die Sensordaten 30 über die Anwendungsschnittstelle 26 von dem Kernmodul 16 an die Kundenapplikation 18 übergeben. Hierdurch ist es auch möglich, dass nicht die Sensordaten 30 direkt, sondern aus den Sensordaten 30 mit dem Kernmodul 16 abgeleitete Sensordaten 54, an die Kundenapplikation 18 übertragen werden. Ferner ist mit dem Prozessor 22 ein Lebensdauerermittlungsmodul 56 verbunden, das anhand des vergangenen Betriebs der Windenergieanlage 100 sowie einer Prognose für den Betrieb mit den auszuführenden Betriebsfunktionen 28, insbesondere unter Berücksichtigung der Parameter 24, eine prognostizierten Lebensdauer 57 bestimmt. Diese Lebensdauer wird vom Prozessor 22 auch über das Kernmodul 16 und die Anwendungsschnittstelle 26 für die Kundenapplikation 18 bereitgestellt, um nach Änderung eines Parameters 24 durch einen Kunden, nämlich durch anpassen einer Funktion 20, eine Rückmeldung zu erhalten, wie sich die Lebensdauer 57 der Windenergieanlage 100 bei Berücksichtigung dieses neuen Parameters 24 ändert.

Figur 3 zeigt eine Steuerung 10, die einer verteilten Steuerung 60 entspricht. Die Anwendungsschnittstelle 26 entspricht hier einer Netzwerkverbindung 62, so dass Kernmodul 16 und Kundenapplikation 18 voneinander örtlich entfernt liegen. Die Betriebssoftware 14 umfasst aber dennoch das Kernmodul 16 sowie die Kundenapplikation 18. Bei dem hier dargestellten Ausführungsbeispiel dient die in der Kundenapplikation 18 bereitgestellte Funktion 20 lediglich zur Auswahl von mehreren Betriebskennlinien 64, die im Kernmodul 16 hinterlegt sind und mit denen die Hardware 42, nämlich beispielsweise der Generator oder auch der Rotor, betrieben wird. Die zweite Programmierschnittstelle 46 kann so beispielsweise genutzt werden, um über ein Mobiltelefon oder ein anderes mobiles Gerät 66 die Funktion 20 so anzupassen, dass hierdurch eine andere als die bisher ausgeführte Betriebskennlinie 64 ausgewählt wird. Der Betrieb der Windenergieanlage 100 wird dann so angepasst, dass ein Betrieb gemäß der anderen Betriebskennlinie ausgeführt wird. Hierbei wird jedoch sichergestellt, dass die Lastgrenzen 34 nicht überschritten werden. Hierzu wird beispielsweise in dem Kernmodul 16 automatisch wieder auf eine vorherige Betriebskennlinie umgeschaltet, die einen sicheren Betrieb gewährleistet.

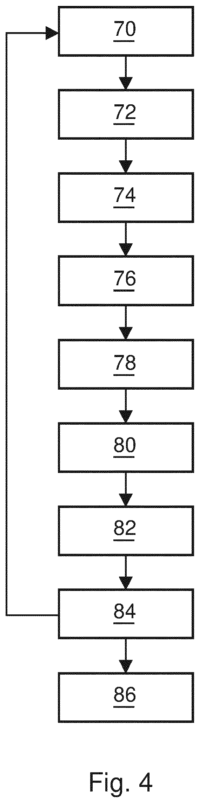

Figur 4 zeigt die Schritte eines Ausführungsbeispiels des Verfahrens. In einem Schritt 70 wird eine Windenergieanlage 100 betrieben. Der Betrieb wird über eine Betriebsfunktion 28 in einem Kernmodul 16 der Windenergieanlage 100 gesteuert. Ferner empfängt die Windenergieanlage 100 über eine zweite Datenschnittstelle 46 eine Funktion 20 von einem Benutzer in einem Schritt 72. Im Schritt 74 wird diese Funktion 20 in einer Kundenapplikation 18 abgelegt. Die Funktion 20 wird dann in der Steuerung 10 der Windenergieanlage 100 im Schritt 76 ausgeführt und liefert im Schritt 78 einen Parameter. Dieser Parameter wird im Schritt 80 an ein Kernmodul 16 übertragen und bei dem Betrieb mit der Betriebsfunktion 28 berücksichtigt, so dass der Betrieb der Windenergieanlage 100 im Schritt 80 angepasst wird. Im Schritt 82 werden Lastgrenzen 34 berücksichtigt und im Fall, dass diese beim geänderten Betrieb überschritten werden, wird im Schritt 84 der Parameter 24, der von der Kundenapplikation 18 über die Anwendungsschnittstelle 26 an das Kernmodul 16 übertragen wurde, entweder abgeändert oder durch einen Parameter 40, der als Standardparameter im Kernmodul 16 hinterlegt wird, ersetzt. Somit wird im Fall des Übertretens der Lastgrenzen 34 die Windenergieanlage 100 wieder im Schritt 70 mit dem ursprünglichen Betriebsmodus betrieben. Außerdem wird im Schritt 86 eine Restlebensdauer der Windenergieanlage 100 bestimmt und für die Kundenapplikation 18 bereitgestellt.

## Patentansprüche

1. Steuerung (10) für einer Windenergieanlage (100) mit einer Betriebssoftware (14) zum Betreiben der Windenergieanlage (100), wobei die Betriebssoftware (14) eingerichtet ist, zumindest eine elektrische Leistung eines Windenergieanlagengenerators, eine Drehzahl eines Windenergieanlagenrotors (106), einen Azimutwinkel einer Windenergieanlagengondel (104) und einen Pitchwinkel mindestens eines Rotorblatts (108) des Windenergieanlagenrotors (106) zu regeln oder zu steuern, wobei die Betriebssoftware (14) ein Kernmodul (16) und mindestens eine Kundenapplikation (18) aufweist,
wobei die Kundenapplikation (18) eingerichtet ist, um einen Parameter (24), insbesondere eine Regelgröße, insbesondere einen Sollwert, in Abhängigkeit von mindestens einer Funktion (20) der Kundenapplikation (18) zu bestimmen und für das Kernmodul (16) bereitzustellen und
wobei das Kernmodul (16) eingerichtet ist, um
- eine auf die Windenergieanlage (100) ausgeübte Last (36, 38) während eines Betreibens der Windenergieanlage (100) zu detektieren und/oder zu prognostizieren,
- im Fall einer detektierten oder prognostizierten Last (36, 38), die unterhalb einer vordefinierten Lastgrenze (34) liegt, die Windenergieanlage (100) in Abhängigkeit von dem durch die Kundenapplikation (18) bereitgestellten Parameter (24) zu betreiben und
- im Fall einer detektierten oder prognostizierten Last (36, 38), die oberhalb der vordefinierten Lastgrenze (34) liegt, den bereitgestellten Parameter (24) anzupassen und die Windenergieanlage (100) in Abhängigkeit von dem angepassten Parameter (24) oder den bereitgestellten Parameter (24) unberücksichtigt zu lassen und die Windenergieanlage (100) mit einem im Kernmodul (16) bestimmten Parameter (40) zu betreiben,
wobei die Steuerung (10) ferner eine erste Programmierschnittstelle (44) und eine zweite Programmierschnittstelle (46) aufweist,
wobei die erste Programmierschnittstelle (44) eingerichtet ist, um das Kernmodul (16), insbesondere die Lastgrenzen (34), zu programmieren und
wobei die zweite Programmierschnittstelle (46) eingerichtet ist, um die Kundenapplikationen (18), insbesondere deren Funktion (20), zu programmieren und um ein Umprogrammieren des Kernmoduls (16) über die zweite Programmierschnittstelle (46) zu verhindern.

2. Steuerung (10) nach Anspruch 1, wobei ein Zugriff auf die erste Programmierschnittstelle (44) durch eine erste Sicherheitseinrichtung (48) und ein Zugriff auf die zweite Programmierschnittstelle (46) durch eine sich vorzugsweise von der ersten Sicherheitseinrichtung (48) unterscheidende, zweite Sicherheitseinrichtung (50) geschützt ist.

3. Steuerung (10) nach einem der vorhergehenden Ansprüche, wobei über die zweite Programmierschnittstelle (46) mindestens eine weitere Kundenapplikation (18) in die Betriebssoftware (14) einfügbar ist.

4. Steuerung (10) nach einem der vorhergehenden Ansprüche, wobei die Steuerung (10) mindestens eine Sensorschnittstelle zum Empfangen eines oder mehrerer Sensordaten (30) von Sensoren (32) der Windenergieanlage (100) oder einer mit der Windenergieanlage (100) verbundenen Einheit aufweist und das Kernmodul (16) eingerichtet ist, die Sensordaten (30) oder aus den Sensordaten (30) mit dem Kernmodul (16) abgeleitete Sensordaten (54) für die Kundenapplikation (18) oder die weiteren Kundenapplikationen (18) bereitzustellen und/oder wobei die Kundenapplikation (18) oder die weiteren Kundenapplikationen (18) eingerichtet sind, den Parameter (24) für das Kernmodul (16) in Abhängigkeit von einer in der Kundenapplikation (18) hinterlegten Funktion (20) und in Abhängigkeit von den Sensordaten (30) oder den abgeleitete Sensordaten (54) zu ermitteln.

5. Steuerung (10) nach einem der vorhergehenden Ansprüche, wobei die Betriebssoftware (14) eine Anwendungsschnittstelle (26) zwischen dem Kernmodul (16) und der Kundenapplikation (18) aufweist, um den Parameter (24) zu empfangen, wobei der Parameter (24) vorzugsweise einen Steuerbefehl oder eine Variable, insbesondere einen Sollwert für eine Regelung im Kernmodul (16) oder eine Stellgröße, umfasst.

6. Steuerung (10) nach einem der vorhergehenden Ansprüche, wobei die Steuerung (10) Bestandteil eines Windparkreglers oder einer Windenergieanlage (100) ist, oder die Steuerung (10) eine verteilte Steuerung (60) ist, die zumindest teilweise Bestandteil einer Leitstelle, eines Windparkreglers, einer Windenergieanlagensteuerung und/oder eines weiteren, insbesondere entfernten, Rechners ist, wobei vorzugsweise das Kernmodul (16) in der Windenergieanlage (100) oder dem Windparkregler und die Kundenapplikation (18) oder die weitere Kundenapplikation (18) in der Leitstelle oder dem weiteren Rechner ausgeführt werden.

7. Steuerung (10) nach einem der vorhergehenden Ansprüche, wobei die Steuerung (10) mit mindestens einer steuerbaren oder regelbaren Hardwarekomponente (42) verbunden ist, und das Kernmodul (16) eingerichtet ist, in Abhängigkeit von Parametern (24), die über eine Anwendungsschnittstelle (26) von der Kundenapplikation (18) empfangen werden, die Hardwarekomponente (42) zu steuern oder zu regeln.

8. Steuerung (10) nach einem der vorhergehenden Ansprüche, wobei das Kernmodul (16) ein Konfliktmanagementmodul aufweist, das eingerichtet ist, Parameter (24), die über die Anwendungsschnittstelle (26) von der Kundenapplikation (18) empfangen werden, auf Konflikte mit von dem Kernmodul (16) ausgeführten Betriebsfunktionen (28) oder auf Konflikte mit von der weiteren Kundenapplikation empfangenen Parametern (24) zu prüfen, und vorzugsweise im Fall eines detektierten Konflikts die von der Kundenapplikation (18) empfangenen Parameter (24) unberücksichtigt zu lassen oder anzupassen.

9. Steuerung (10) nach einem der vorhergehenden Ansprüche, wobei die Steuerung (10) mit einem Netzwerk verbunden und eingerichtet ist, um in Abhängigkeit von einer Funktion (20) der Kundenapplikation (18) von dem Kernmodul (16) empfangene Daten, insbesondere Zustandsdaten der Steuerung (10) oder einer weiteren mit der Steuerung (10) verbundenen Einheit, wie einem Sensor (32), über das Netzwerk auszusenden.

10. Steuerung (10) nach einem der vorhergehenden Ansprüche, wobei die Steuerung (10) mit einem Netzwerk verbunden und eingerichtet ist, um in Abhängigkeit von einer Funktion (20) der Kundenapplikation (18) durch die Kundenapplikation (18) über das Netzwerk Daten zu empfangen und die Daten oder daran abgeleitete Daten über die Anwendungsschnittstelle (26) an das Kernmodul (16) zu übertragen.

11. Steuerung (10) nach Anspruch 10, wobei die von der Kundenapplikation (18) empfangenen Daten Sensordaten (30) sind, die mit der in der Kundenapplikation (18) hinterlegten Funktion (20) angepasst werden, um dadurch Steuerbefehle oder Sollwerte für eine Steuerung (10) der Windenergieanlage (100) zu erzeugen, um diese als Parameter (24) an das Kernmodul (16) zu übergeben.

12. Steuerung (10) nach einem der vorhergehenden Ansprüche, wobei das Kernmodul (16) mehrere hinterlegte Betriebskennlinien (64) und/oder mehrere vordefinierte Betriebsfunktionen (28) und/oder mehrere vordefinierte Parameter einer Betriebsfunktion aufweist, und die Steuerung (10) eingerichtet ist über die Anwendungsschnittstelle (26) einen Aufruf mindestens einer der Betriebsfunktionen (28) oder eine Auswahl einer der hinterlegten Betriebskennlinien (64) oder mindestens eines der Parameter der Betriebsfunktionen auszuführen, wobei vorzugsweise eine Änderungsmöglichkeit der Betriebskennlinien (64) der Betriebsfunktionen oder der Parameter der Betriebsfunktionen über die Anwendungsschnittstelle (26) gesperrt ist.

13. Steuerung (10) nach einem der vorhergehenden Ansprüche, wobei in dem Kernmodul (16) mindestens eine Betriebskennlinie (64), insbesondere eine Drehzahl-Leistungs-Kennlinie speicherbar ist und das Kernmodul (16) eingerichtet ist, um in Abhängigkeit von der Betriebskennlinie (64) eine Einspeiseleistung der Windenergieanlage (100) zu regeln, wobei die Kundenapplikation (18) vorzugsweise eingerichtet ist, die Betriebskennlinie (64) für das Kernmodul (16) bereitzustellen oder die gespeicherte Betriebskennlinie (64) anzupassen oder zu ändern.

14. Verfahren für eine Steuerung (10) nach einem der Ansprüche 1 bis 13, wobei über die zweite Programmierschnittstelle eine Kundenapplikation (18) programmiert oder umprogrammiert wird, um den Betrieb der Steuerung anzupassen.

15. Computerprogrammprodukt, umfassend Instruktionen, die, wenn sie auf einem Computer ausgeführt werden, den Computer veranlassen, das Verfahren nach Anspruch 14 auszuführen oder die, wenn sie auf einem Computer ausgeführt werden, den Computer veranlassen, eine Steuerung nach einem der Ansprüche 1 bis 13 zu bilden.

## Claims

1. A controller (10) for a wind turbine (100) with an operating software (14) for operating the wind turbine (100), wherein the operating software (14) is set up to regulate or control at least an electrical output of a wind turbine generator, a speed of a wind turbine rotor (106), an azimuth angle of a wind turbine nacelle (104), and a pitch angle of at least one rotor blade (108) of the wind turbine rotor (106), wherein the operating software (14) comprises a core module (16) and at least one customer application (18),
wherein the customer application (18) is set up to determine a parameter (24), in particular a control variable, in particular a target value, depending on at least one function (20) of the customer application (18), and provide it for the core module (16), and
wherein the core module (16) is set up to
- Detect and/or predict a load (36, 38) acting on the wind turbine (100) during an operation of the wind turbine (100),
- In a case where a detected or predicted load (36, 38) lies below a predefined load limit (34), to operate the wind turbine (100) as a function of the parameter (24) provided by the customer application (18), and
- In a case where a detected or predicted load (36, 38) exceeds the predefined load limit (34), to adjust the prepared parameter (24) and leave the wind turbine (100) unconsidered as a function of the adjusted parameter (24) or the provided parameter (24), and operate the wind turbine (100) with a parameter (40) determined in the core module (16),
wherein the controller (10) further has a first programming interface (44) and a second programming interface (46),
wherein the first programming interface (44) is set up to program the core module (16), in particular the load limits (34), and
wherein the second programming interface (46) is set up to program the customer applications (18), in particular their function (20), and prevent the core module (16) from being reprogrammed via the second programming interface (46).

2. The controller (10) according to claim 1, wherein access to the first programming interface (44) is protected by a first safety device (48), and access to the second programming interface (46) is protected by a second safety device (50), which preferably differs from the first safety device (48).

3. The controller (10) according to one of the preceding claims, wherein at least one additional customer application (18) can be incorporated into the operating software (14) via the second programming interface (46).

4. The controller (10) according to one of the preceding claims, wherein the controller (10) comprises at least one sensor interface for receiving one or several sensor data (30) from sensors (32) of the wind turbine (100), or from a unit connected with the wind turbine (100), and the core module (16) is set up to provide the sensor data (30) or sensor data (54) derived from the sensor data (30) with the core module (16) for the customer application (18) or the additional customer applications (18), and/or the customer application (18) or additional customer applications is/are set up to determine the parameter (24) for the core module (16) depending on a function (20) stored in the customer application (18) and depending on the sensor data (30) or the derived sensor data (54).

5. The controller (10) according to one of the preceding claims, wherein the operating software (14) has an application interface (26) between the core module (16) and the customer application (18), so as to receive the parameter (24), wherein the parameter (24) preferably comprises a control command or a variable, in particular a target value for regulation in the core module (16) or a manipulated variable.

6. The controller (10) according to one of the preceding claims, wherein the controller (10) is a component of a wind farm regulator or a wind turbine (100), or the controller (10) is a distributed controller (60), which is at least partially a component of a control center, a wind farm regulator, a wind turbine controller and/or another, in particular remote computer, wherein it is preferable that the core module (16) be designed in the wind turbine (100) or the wind farm regulator, and that the customer application (18) or the additional customer application (18) be designed in the control center or the additional computer.

7. The controller (10) according to one of the preceding claims, wherein the controller (10) is connected with at least one controllable or regulatable hardware component (42), and the core module (16) is set up to control or regulate the hardware component (42) as a function of parameters (24) which are received via the application interface (26) from the customer application (18).

8. The controller (10) according to one of the preceding claims, wherein the core module (16) has a conflict management module, which is set up to check parameters (24) received via the application interface (26) from the customer application (18) for conflicts with operating functions (28) implemented by the core module (16), or for conflicts with parameters (24) received from the additional customer application, and in case of a detected conflict, ignore or adjust the parameters (24) received from the customer application (18).

9. The controller (10) according to one of the preceding claims, wherein the controller (10) is connected with a network and set up to transmit data received from the core module (16), in particular state data for the controller (10) or another unit connected with the controller (10), such as a sensor (32), via the network depending on a function (20) of the customer application (18).

10. The controller (10) according to one of the preceding claims, wherein the controller (10) is connected with a network and set up to receive data through the customer application (18) via the network depending on a function (20) of the customer application (18), and to transmit the data or data derived from the latter to the core module (16) via the application interface (26).

11. The controller (10) according to claim 10, wherein the data received from the customer application (18) are sensor data (30), which are adjusted with the function (20) stored in the customer application (18), so as to thereby generate control commands or target values for a controller (10) of the wind turbine (100), in order to transfer them as parameters (24) to the core module (16).

12. The controller (10) according to one of the preceding claims, wherein the core module (16) has several stored operating characteristics (64) and/or several predefined operating functions (28) and/or several predefined parameters of an operating function, and the controller (10) is set up by way of the application interface (26) to retrieve at least one of the operating functions (28) or select one of the stored operating characteristics (64), or implement at least one of the parameters of the operating functions, wherein an ability to change the operating characteristics (64) of the operating functions or the parameters of the operating functions via the application interface (26) is preferably blocked.

13. The controller (10) according to one of the preceding claims, wherein the core module (16) can store at least one operating characteristic (64), in particular a speed/power characteristic, and the core module (16) is set up to regulate a feed-in power of the wind turbine (100) as a function of the operating characteristic (64), wherein the customer application (18) is preferably set up to provide the operating characteristic (64) for the core module (16), or to adjust or change the stored operating characteristic (64).

14. A method for a controller (10) according to one of claims 1 to 13, wherein a customer application (18) is programmed or reprogrammed via the second programming interface, so as to adjust the controller operation.

15. A computer program product, comprising instructions which, when performed on a computer, prompt the computer to implement the method according to claim 14 or which, when performed on a computer, prompt the computer to create a controller according to one of claims 1 to 13.

## Revendications

1. Commande (10) pour une éolienne (100) avec un logiciel d'exploitation (14) pour exploiter l'éolienne (100), dans laquelle le logiciel d'exploitation (14) est configuré pour réguler ou pour commander au moins une puissance électrique d'un générateur d'éolienne, une vitesse de rotation d'un rotor d'éolienne (106), un azimut d'une nacelle d'éolienne (104) et un angle de calage d'au moins une pale de rotor (108) du rotor d'éolienne (106), dans laquelle le logiciel d'exploitation (14) présente un module central (16) et au moins une application client (18),
dans laquelle l'application client (18) est configurée pour déterminer un paramètre (24), en particulier une grandeur de régulation, en particulier une valeur théorique, en fonction d'au moins une fonction (20) de l'application client (18) et pour fournir le module central (16) et
dans laquelle le module central (16) est configuré pour
- détecter et/ou pronostiquer une charge (36, 38) exercée sur l'éolienne (100) pendant une exploitation de l'éolienne (100),
- dans le cas d'une charge (36, 38), détectée ou pronostiquée, qui se situe au-dessous d'une limite de charge (34) prédéfinie, pour exploiter l'éolienne (100) en fonction du paramètre (24) fourni par l'application client (18) et
- dans le cas d'une charge (36, 38), détectée ou pronostiquée, qui se situe au-dessus de la limite de charge (34) prédéfinie, pour ajuster le paramètre (24) fourni et pour ignorer l'éolienne (100) en fonction du paramètre (24) ajusté ou du paramètre (24) fourni et pour exploiter l'éolienne (100) avec un paramètre (40) déterminé dans le module central (16),
dans laquelle la commande (10) présente en outre une première interface de programmation (44) et une deuxième interface de programmation (46),
dans laquelle la première interface de programmation (44) est configurée pour programmer le module central (16), en particulier les limites de charge (34), et
dans laquelle la deuxième interface de programmation (46) est configurée pour programmer les applications client (18), en particulier leur fonction (20), et pour empêcher une reprogrammation du module central (16) par l'intermédiaire de la deuxième interface de programmation (46).

2. Commande (10) selon la revendication 1, dans laquelle un accès à la première interface de programmation (44) est protégé par un premier dispositif de sécurité (48) et un accès à la deuxième interface de programmation (46) par un deuxième dispositif de sécurité (50), de préférence différent du premier dispositif de sécurité (48).

3. Commande (10) selon l'une quelconque des revendications précédentes, dans laquelle au moins une autre application client (18) peut être insérée dans le logiciel d'exploitation (14) par l'intermédiaire de la deuxième interface de programmation (46).

4. Commande (10) selon l'une quelconque des revendications précédentes, dans laquelle la commande (10) présente au moins une interface de capteur pour la réception d'une ou plusieurs données de capteur (30) de capteurs (32) de l'éolienne (100) ou d'une unité reliée à l'éolienne (100) et le module central (16) est configuré pour fournir les données de capteur (30) ou des données de capteur (54) dérivées des données de capteur (30) avec le module central (16) pour l'application client (18) ou les autres applications client (18) et/ou dans laquelle l'application client (18) ou les autres applications client (18) sont configurées pour déterminer le paramètre (24) pour le module central (16) en fonction d'une fonction (20) enregistrée dans l'application client (18) et en fonction des données de capteur (30) ou des données de capteur (54) dérivées.

5. Commande (10) selon l'une quelconque des revendications précédentes, dans laquelle le logiciel d'exploitation (14) présente une interface d'application (26) entre le module central (16) et l'application client (18), afin de recevoir le paramètre (24), dans laquelle le paramètre (24) comprend de préférence une instruction de commande ou une variable, en particulier une valeur théorique pour une régulation dans le module central (16) ou une grandeur réglante.

6. Commande (10) selon l'une quelconque des revendications précédentes, dans laquelle la commande (10) fait partie d'un régulateur de parc éolien ou d'une éolienne (100), ou la commande (10) est une commande distribuée (60), qui fait au moins partiellement partie d'un centre de contrôle, d'un régulateur de parc éolien, d'une commande d'éolienne et/ou d'un autre calculateur, en particulier distant, dans laquelle de préférence le module central (16) est conçu dans l'éolienne (100) ou le régulateur de parc éolien et l'application client (18) ou l'autre application client (18) dans le centre de contrôle ou l'autre calculateur.

7. Commande (10) selon l'une quelconque des revendications précédentes, dans laquelle la commande (10) est reliée à au moins un composant matériel (42) pouvant être commandé ou pouvant être régulé, et le module central (16) est configuré pour commander ou pour réguler le composant matériel (42) en fonction de paramètres (24) qui sont reçus par l'application client (18) par l'intermédiaire d'une interface d'application (26).

8. Commande (10) selon l'une quelconque des revendications précédentes, dans laquelle le module central (16) présente un module de gestion de conflit, qui est configuré pour contrôler les paramètres (24), qui sont reçus par l'application client (18) par l'intermédiaire de l'interface d'application (26), en vue d'y détecter la présence de conflits avec des fonctions d'exploitation (28) exécutées par le module central (16) ou de conflits avec des paramètres (24) reçus de l'autre application client, et de préférence dans le cas d'un conflit détecté pour ignorer le paramètre (24) reçu par l'application client (18) ou pour l'ajuster.

9. Commande (10) selon l'une quelconque des revendications précédentes, dans laquelle la commande (10) est reliée à un réseau et configurée pour envoyer les données reçues par le module central (16), en particulier les données d'état de la commande (10) ou d'une autre unité reliée à la commande (10), tel qu'un capteur (32), par l'intermédiaire du réseau, en fonction d'une fonction (20) de l'application client (18).

10. Commande (10) selon l'une quelconque des revendications précédentes, dans laquelle la commande (10) est reliée à un réseau et configurée pour recevoir des données par l'application client (18) par l'intermédiaire du réseau en fonction d'une fonction (20) de l'application client (18) et pour transmettre au module central (16) les données ou données dérivées de celles-ci par l'intermédiaire de l'interface d'application (26).

11. Commande (10) selon la revendication 10, dans laquelle les données reçues par l'application client (18) sont des données de capteur (30), qui sont ajustées avec la fonction (20) enregistrée dans l'application client (18), afin de produire ainsi des instructions de commande ou valeurs théoriques pour une commande (10) de l'éolienne (100), afin de transmettre celles-ci en tant que paramètres (24) au module central (16).

12. Commande (10) selon l'une quelconque des revendications précédentes, dans laquelle le module central (16) présente plusieurs caractéristiques d'exploitation (64) enregistrées et/ou plusieurs fonctions d'exploitation (28) prédéfinies et/ou plusieurs paramètres prédéfinis d'une fonction d'exploitation, et la commande (10) est configurée pour exécuter, par l'intermédiaire de l'interface d'application (26), une interrogation au moins d'une des fonctions d'exploitation (28) ou une sélection d'une des caractéristiques d'exploitation (64) enregistrées ou au moins d'un des paramètres des fonctions d'exploitation, dans laquelle de préférence une possibilité de modification des caractéristiques d'exploitation (64) des fonctions d'exploitation ou des paramètres des fonctions d'exploitation est bloquée par l'intermédiaire de l'interface d'application (26).

13. Commande (10) selon l'une quelconque des revendications précédentes, dans laquelle au moins une caractéristique d'exploitation (64), en particulier une caractéristique vitesse de rotation-puissance, peut être mise en mémoire dans le module central (16) et le module central (16) est configuré pour réguler une puissance d'injection de l'éolienne (100) en fonction de la caractéristique d'exploitation (64), dans laquelle l'application client (18) est configurée de préférence pour fournir la caractéristique d'exploitation (64) pour le module central (16) ou pour ajuster ou pour modifier la caractéristique d'exploitation (64) mise en mémoire.

14. Procédé pour une commande (10) selon l'une quelconque des revendications 1 à 13, dans lequel une application client (18) est programmée ou reprogrammée par l'intermédiaire de la deuxième interface de programmation, afin d'ajuster l'exploitation de la commande.

15. Produit-programme d'ordinateur, comprenant des instructions qui, lorsqu'elles sont exécutées sur un ordinateur, amènent l'ordinateur à exécuter le procédé selon la revendication 14 ou qui, lorsqu'elles sont exécutées sur un ordinateur, amènent l'ordinateur à former une commande selon l'une quelconque des revendications 1 à 13.
